# EUROPÄISCHE PATENTSCHRIFT

(11) **EP 3 377 860 B1**
(45) Veröffentlichungstag und Bekanntmachung des Hinweises auf die Patenterteilung: **05.06.2019**
(21) Anmeldenummer: 16805717.2
(22) Anmeldetag: 17.11.2016
(51) Int. Cl.: G01D 5/34

(54) **SENSOR ZUR BESTIMMUNG EINES DREHWINKELS**
SENSOR FOR DETERMINING AN ANGLE OF ROTATION
CAPTEUR POUR DÉTERMINER UN ANGLE DE ROTATION

(30) Priorität: 17.11.2015 AT 509782015
(43) Veröffentlichungstag der Anmeldung: 26.09.2018
(73) Patentinhaber: Technische Universität Wien, 1040 Wien (AT)
(72) Erfinder: DABSCH, Alexander, 1130 Wien (AT); KEPLINGER, Franz, 1210 Wien (AT); KAINZ, Andreas, 1080 Wien (AT)
(74) Vertreter: KLIMENT & HENHAPEL
(86) Internationale Anmeldenummer: PCT/AT2016/060112
(87) Internationale Veröffentlichungsnummer: WO 2017/083898

(56) Entgegenhaltungen:
- DE-A1-102012 012 695
- DE-B- 1 284 644

## Beschreibung

### GEBIET DER ERFINDUNG

Die vorliegende Erfindung betrifft einen Sensor zur Bestimmung eines Drehwinkels um eine Drehachse, der Sensor umfassend ein in einem Basiselement um die Drehachse drehbar gelagertes Drehelement, welches aus einem ersten Material mit einem ersten Brechungsindex n1 gefertigt ist, wobei zumindest ein relativ zum Basiselement fix angeordnetes Lichterzeugungsmittel vorgesehen ist sowie zumindest ein relativ zum Basiselement fix angeordnetes Lichtdetektionsmittel, um zumindest ein vom mindestens einen Lichterzeugungsmittel ausgesandtes und durch das Drehelement entlang zumindest eines Strahlengangs hindurch getretenes Lichtsignal zu detektieren, wobei im Drehelement mindestens eine Brechungsstruktur vorgesehen ist, die einen zweiten Brechungsindex n2 aufweist, wobei n2 ≠ n1, vorzugsweise n2 < n1, gilt und wobei der mindestens eine Strahlengang zumindest in einem ersten Drehwinkelbereich durch die mindestens eine Brechungsstruktur verläuft, um zumindest im ersten Drehwinkelbereich dem mindestens einen mit dem mindestens einen Lichtdetektionsmittel detektierten Lichtsignal einen bestimmten Drehwinkel zuordnen zu können.

### STAND DER TECHNIK

In unterschiedlichsten Gebieten der Technik ist es notwendig, Drehwinkel genau bestimmen zu können. Beispielsweise existieren in der Automobilindustrie zahlreiche Anwendungen für entsprechende Winkelsensoren, z.B. um die Positionierung von Lenksäulen zu bestimmen, in Scheinwerfersteuerungen oder allg. zur Kontrolle von verwendeten Stellmotoren. Aber auch in anderen Gebieten, wie beispielsweise in der Luft- und Raumfahrt, ist die Messung von Drehwinkeln notwendig, beispielsweise zur Bestimmung eines Drehwinkels einer Triebwerksachse.

Bekannte Systeme arbeiten zum Teil mit Geberscheiben oder mit Magnetsensoren, woraus eine Reihe von Nachteilen resultiert. Neben einem entsprechend komplizierten Aufbau ist bei vielen Systemen vor allem die Notwendigkeit, einen Referenzpunkt anfahren zu müssen, als nachteilig zu nennen, da rein statische Winkelmessungen somit nicht möglich sind.

Weiters ist die Verwendung von Magnetsensoren in einer Vielzahl von Anwendungsfällen ausgeschlossen, bei denen äußere magnetische Einflüsse vorhanden sind und das Messergebnis unzulässig verfälschen würden. Insbesondere für Anwendungen in der Raumfahrt scheiden solche Winkelsensoren daher aus.

Schließlich werden in bekannten Systemen komplizierte Aufbauten mit mehreren Sensoren verwendet, um zu verhindern, dass Schwankungen in der Energieversorgung zu einem verfälschten Messergebnis führen. Entsprechend kostspielig gestaltet sich der Einsatz solcher Systeme. Zudem steigt der Platzbedarf und verhindert so eine für viele Anwendungen gewünschte Miniaturisierung.

Aus der DE 1284644 B ist eine Vorrichtung zum Bestimmen der Winkellage einer Welle bekannt, wobei ein transparentes zylindrisches Bauteil bzw. eine transparente Scheibe auf der Welle angeordnet ist und einen radialen Schlitz aufweist. Eine Lampe und eine Photozelle befinden sich auf gegenüberliegenden Seiten der Vorrichtung und liegen auf einer Linie, die durch die Welle führt. Im Schlitz liegt ein anderer Brechungsindex vor als in der restlichen Scheibe, was den Strahlengang des von der Lampe ausgesendeten Lichts in Abhängigkeit vom Drehwinkel beeinflusst.

Aus der DE 102012012695 A1 ist eine Vorrichtung zur Bestimmung von Relativverlagerungen von Körperteilen oder Körperbereichen mit einem Sender und einem dem Sender zugeordneten Sensor bekannt, wobei zwischen dem Sender und dem Sensor eine Abschattungseinrichtung angeordnet ist, die drehbar ist und an einem Körerteil oder Körperbereich festgelegt ist. Dabei kann eine Veränderung des Brechungsindex vorgesehen sein, sodass in Abhängigkeit von der Position des Grundkörpers der Abschattungseinrichtung unterschiedliche (Licht-)Signalintensitäten auf den Sensor auftreffen.

### AUFGABE DER ERFINDUNG

Es ist daher Aufgabe der vorliegenden Erfindung einen Sensor zur Bestimmung eines Drehwinkels um eine Drehachse zur Verfügung zu stellen, der die oben genannten Nachteile vermeidet. Insbesondere soll der Sensor statische Winkelmessungen ermöglichen und dabei gegen magnetische Einflüsse unempfindlich sein. Bevorzugt soll der erfindungsgemäße Sensor unempfindlich gegenüber Schwankungen der Energieversorgung sein. Besonders bevorzugt soll der erfindungsgemäße Sensor miniaturisierbar sein.

### DARSTELLUNG DER ERFINDUNG

Die vorliegende Erfindung basiert auf einem optischen Winkelsensor, wobei ein Strahlengang zwischen einem Lichterzeugungsmittel und einem Lichtdetektionsmittel, welches zur Detektion des vom Lichterzeugungsmittel erzeugten Lichts dient, durch ein Drehelement führt, das um eine Drehachse drehbar gelagert ist, um einen Drehwinkel des Drehelements um die Drehachse zu bestimmen. Dabei ist im Drehelement eine Brechungsstruktur vorgesehen, die zumindest in einem gewissen Drehwinkelbereich im Strahlengang angeordnet ist, um das Licht in Abhängigkeit vom konkret vorliegenden Drehwinkel zu brechen und somit zu beeinflussen, insbesondere indem eine Reflexions- bzw. Transmissionsänderung herbeigeführt wird. Die Brechungsstruktur weist entsprechend einen anderen Brechungsindex auf als das restliche Drehelement.

Die Beeinflussung des Lichts in Abhängigkeit vom Drehwinkel ist durch die konkrete geometrische Ausgestaltung der Brechungsstruktur und durch deren Anordnung im Drehelement bestimmt und kann mittels der wohlbekannten Gesetze der Optik berechnet werden, vgl. z.B. L. Novotny und B. Hecht, "Principles of Nano-Optics", Cambridge University Press, 2nd ed., 2012, ISBN 10: 1107005469. Indem die Brechungsstruktur eine bestimmte gewünschte Form aufweist und im Drehelement definiert angeordnet ist, kann also für jeden Drehwinkel die Beeinflussung des Lichts durch die Brechungsstruktur berechnet werden. Dieses Prinzip ermöglicht statische Winkelmessungen ohne die Notwendigkeit, vor der Messung einen Referenzpunkt anfahren zu müssen.

Daher ist es bei einem Sensor zur Bestimmung eines Drehwinkels um eine Drehachse, der Sensor umfassend ein in einem Basiselement um die Drehachse drehbar gelagertes Drehelement, welches aus einem ersten Material mit einem ersten Brechungsindex n1 gefertigt ist, wobei zumindest ein relativ zum Basiselement fix angeordnetes Lichterzeugungsmittel vorgesehen ist sowie zumindest ein relativ zum Basiselement fix angeordnetes Lichtdetektionsmittel, um zumindest ein vom mindestens einen Lichterzeugungsmittel ausgesandtes und durch das Drehelement entlang zumindest eines Strahlengangs hindurch getretenes Lichtsignal zu detektieren, vorgesehen, dass im Drehelement mindestens eine Brechungsstruktur vorgesehen ist, die einen zweiten Brechungsindex n2 aufweist, wobei n2 ≠ n1, vorzugsweise n2 < n1, gilt und wobei der mindestens eine Strahlengang zumindest in einem ersten Drehwinkelbereich durch die mindestens eine Brechungsstruktur verläuft, um zumindest im ersten Drehwinkelbereich dem mindestens einen mit dem mindestens einen Lichtdetektionsmittel detektierten Lichtsignal einen bestimmten Drehwinkel zuordnen zu können.

Die Brechungsstruktur ist also im Wesentlichen umgeben vom ersten Material mit dem Brechungsindex n1, wobei die Brechungsstruktur relativ zum ersten Material bzw. zum restlichen Drehelement fix angeordnet ist. Daher bestimmen die Form und die Anordnung der Brechungsstruktur, insbesondere in einer Ebene, in der das Lichterzeugungsmittel und das Lichtdetektionsmittel angeordnet sind, das Lichtsignal, das vom mindestens einen Lichtdetektionsmittel in Abhängigkeit des Drehwinkels detektiert wird.

Der Strahlengang verläuft zumindest im ersten Drehwinkelbereich abschnittsweise in der Brechungsstruktur bzw. kreuzt diese. Anders gesagt tritt das Licht, im Allgemeinen im Drehelement, an einer Stelle in die Brechungsstruktur ein und verlässt diese an einer anderen Stelle, im Allgemeinen ebenfalls im Drehelement.

Die im Drehelement bzw. im ersten Material angeordnete Brechungsstruktur definiert somit eine vom Drehwinkel abhängige Übertragungsfunktion für die interessierende Eigenschaft des Lichts.

Um auch mit nur einem einzigen erfindungsgemäßen Sensor eine gewisse Redundanz der Messung des Drehwinkels sicherzustellen, ist es beim erfindungsgemäßen Sensor vorgesehen, dass das Drehelement entlang der Drehachse gesehen aus mehreren Schichten aufgebaut ist, wobei in jeder Schicht mindestens eine Brechungsstruktur vorgesehen ist. D.h. in jeder Schicht ist zumindest eine Brechungsstruktur vorhanden, beispielsweise indem in jeder Schicht genau eine Brechungsstruktur vorgesehen ist. Es können aber in zumindest einer der Schichten auch mehrere Brechungsstrukturen vorgesehen sein. Entsprechend kann zur Sicherstellung einer redundanten Messung auch nur eine einzige Schicht vorgesehen sein, in der mehrere Brechungsstrukturen angeordnet sind.

Neben der Sicherstellung einer Redundanz kann auf diese Weise auch der Messbereich bzw. der messbare Winkelbereich erweitert werden, indem die Brechungsstrukturen jeweils um einen gewissen Drehwinkel zueinander versetzt im Drehelement angeordnet sind. Diese versetzte Anordnung zur Erweiterung des Messbereichs ist prinzipiell auch in einer einzigen Schicht möglich. Um jedoch sicherzustellen, dass der Aufbau herstellungstechnisch besonders einfach ist und dass sich ein besonders weiter Messbereich ergibt, ist es beim erfindungsgemäßen Sensor vorgesehen, dass die Brechungsstrukturen verschiedener Schichten zueinander derart angeordnet sind, dass die Strahlengänge in verschiedenen Drehwinkelbereichen durch diese Brechungsstrukturen verlaufen, wobei die verschiedenen Drehwinkelbereiche vorzugsweise abschnittsweise überlappen. Letzteres stellt sicher, dass der sich ergebende Messbereich durchgehend ist und keine Lücken aufweist. Die verschiedenen Strahlengänge umfassen dabei die einzelnen Strahlengänge in den jeweiligen Schichten.

Um Schwankungen der Eigenschaften des vom Lichterzeugungsmittel ausgesandten Lichts aufgrund von Schwankungen in der Energieversorgung des Lichterzeugungsmittels Rechnung zu tragen, ist es bei einer bevorzugten Ausführungsform des erfindungsgemäßen Sensors vorgesehen, dass zumindest ein Referenzlichtdetektionsmittel vorgesehen ist, um vom mindestens einen Lichterzeugungsmittel ausgesandtes Licht zu detektieren, noch bevor dieses Licht auf die mindestens eine Brechungsstruktur, vorzugsweise auf das Drehelement, trifft. D.h. mit dem Referenzlichtdetektionsmittel wird im Wesentlichen die interessierende Eigenschaft des Lichts gemessen, ohne dass diese Eigenschaft von der Brechungsstruktur verändert worden ist. Vorzugsweise ist der Sensor so ausgelegt, dass das Licht vom Referenzlichtdetektionsmittel so detektiert wird, wie es vom Lichterzeugungsmittel ausgesandt wird.

Das mit dem Lichtdetektionsmittel detektierte Licht kann somit in Relation zum Messergebnis des Referenzlichtdetektionsmittels gesetzt werden, wodurch verhindert wird, dass durch das Lichterzeugungsmittel selbst verursachte Schwankungen der Eigenschaften des ausgesandten Lichts das Ergebnis für den Drehwinkel verfälschen.

Insbesondere können auf diese Weise Intensitätsschwankungen des vom Lichterzeugungsmittel ausgesandten Lichts kompensiert werden. D.h. es wird mittels des Referenzlichtdetektionsmittels laufend ein Maß für die Stärke des Lichterzeugungsmittels bzw. für eine Ausgangsintensität des vom Lichterzeugungsmittel ausgesandten Lichts bestimmt. Die Intensität, die durch das Lichtdetektionsmittel gemessen wird, wird zur Ausgangsintensität bzw. zu diesem Maß in Relation gesetzt. Das erhaltene Verhältnis ist unabhängig von Schwankungen der Lichtstärke des Lichterzeugungsmittels, welche Schwankungen z.B. aufgrund von Versorgungsspannungsschwankungen zustande kommen können. Es versteht sich, dass bei mehreren Lichterzeugungsmitteln für jedes mindestens ein eigenes Referenzlichtdetektionsmittel vorgesehen sein kann.

Typischerweise verursacht die Brechungsstruktur eine Reflexions- und/oder Transmissionsänderung im Strahlengang, wenn sich der Drehwinkel ändert bzw. bewirkt die Brechungsstruktur, dass zumindest in einem gewissen ersten Drehwinkelbereich jedem Transmissionswert ein gewisser Drehwinkel zugeordnet werden kann. Entsprechend kann die sich ergebende Übertragungsfunktion unmittelbar als Transmissionsgrad aus den wohlbekannten Fresnelschen Formeln berechnet werden (vgl. L. Novotny und B. Hecht, "Principles of Nano-Optics", Cambridge University Press, 2nd ed., 2012, ISBN 10: 1107005469), wenn die Geometrie der Brechungsstruktur sowie n1 und n2 bekannt sind. Daher ist es bei einer bevorzugten Ausführungsform des erfindungsgemäßen Sensors vorgesehen, dass das mindestens eine Lichtdetektionsmittel zur Bestimmung der Lichtintensität ausgelegt ist. Diese Art der Detektion ist technisch besonders einfach zu realisieren, wobei eine Fülle von an sich bekannten Detektoren als Lichtdetektionsmittel verwendet werden kann. Dabei wird die Auswahl des Detektors insbesondere im Hinblick auf die verwendete Wellenlänge bzw. auf den verwendeten Wellenlängenbereich getroffen. Analog ist es bei einer bevorzugten Ausführungsform des erfindungsgemäßen Sensors vorgesehen, dass das mindestens eine Referenzlichtdetektionsmittel zur Bestimmung der Lichtintensität ausgelegt ist.

Es sei jedoch bemerkt, dass mittels der Brechungsstruktur prinzipiell auch eine Übertragungsfunktion für andere Eigenschaften des Lichts definiert werden kann, beispielsweise für einen drehwinkelabhängigen Phasenschub.

Um eine konstruktiv besonders einfache Anordnung zu realisieren, ist es bei einer bevorzugten Ausführungsform des erfindungsgemäßen Sensors vorgesehen, dass das mindestens eine Lichterzeugungsmittel und das mindestens eine Lichtdetektionsmittel einander gegenüberliegend angeordnet sind, wobei die Drehachse zwischen dem mindestens einen Lichterzeugungsmittel und dem mindestens einen Lichtdetektionsmittel angeordnet ist. Vorzugsweise sind dabei das Lichterzeugungsmittel und das Lichtdetektionsmittel in einer auf die Drehachse normal stehenden Ebene angeordnet bzw. liegt der Strahlengang vorzugsweise in dieser Ebene.

Um die Brechungsstruktur mit einem von n1 unterschiedlichen Brechungsindex n2 einfach, genau und mit hoher Reproduzierbarkeit herstellen zu können, ist es bei einer bevorzugten Ausführungsform des erfindungsgemäßen Sensors vorgesehen, dass die mindestens eine Brechungsstruktur durch eine Aussparung im ersten Material des Drehelements gebildet ist. Bei Wellenlängen, die größer sind als jene im Röntgenbereich, kann auf diese Weise n2 < n1 auf konstruktiv einfache Art und Weise sichergestellt werden.

Um die Aussparung kostengünstig und mit einem wohlerprobten Verfahren herstellen zu können, ist es bei einer besonders bevorzugten Ausführungsform des erfindungsgemäßen Sensors vorgesehen, dass die mindestens eine Brechungsstruktur in das erste Material des Drehelements geätzt ist. Dieses etablierte Verfahren bietet eine besonders hohe Genauigkeit sowie eine besonders hohe Reproduzierbarkeit zur Herstellung der gewünschten Brechungsstruktur. Weiterhin können somit in definierter Weise sehr kleine Brechungsstrukturen - ggf. auch im Mikrometerbereich oder Submikrometerbereich - erzeugt werden, was die Miniaturisierung des erfindungsgemäßen Sensors begünstigt.

Insbesondere um wohletablierte Ätzprozesse zur Herstellung der gewünschten Brechungsstruktur anwenden zu können, ist es bei einer bevorzugten Ausführungsform des erfindungsgemäßen Sensors vorgesehen, dass das erste Material ein Si-Material oder ein Glas-Material ist. Dabei sind unter Si-Material Materialien auf Si-Basis zu verstehen, insbesondere Si-Wafer und -Substrate, d.h. es muss sich nicht um reines Si handeln. Unter Glas-Material sind Materialien auf Glas-Basis zu verstehen, insbesondere Glas-Wafer und -Substrate. Bei den genannten Si- und Glas-Materialien kann es sich insbesondere um dotierte Materialien handeln, wobei durch die Dotierung der Brechungsindex n1 gezielt beeinflusst werden kann. Generell kann durch entsprechende Wahl des ersten Materials der Brechungsindex n1 gezielt variiert werden, was - neben der Geometrie der Brechungsstruktur - für die Gestaltung der Übertragungsfunktion verwendet werden kann.

Es sei betont, dass die mindestens eine Brechungsstruktur nicht nur als Aussparung ausgebildet werden kann. Beispielsweise ist es denkbar, dass auch die mindestens eine Brechungsstruktur aus einem Si-Material oder einem Glas-Material besteht. Um den Brechungsindex dieser Materialien gezielt zu beeinflussen und somit einen gewünschten Wert für n2 zu erreichen, können das Si-Material und/oder das Glas-Material, die für die mindestens eine Brechungsstruktur vorgesehen sind, auch gezielt dotiert werden. Weiters ist es denkbar, die mindestens eine Brechungsstruktur direkt im Drehelement, das aus einem Si-Material oder einem Glas-Material gefertigt ist, durch Dotieren eines gewünschten Bereichs des Drehelements herzustellen. Dabei kann die Brechungsstruktur im Allgemeinen auch dadurch ausgebildet sein, dass sie eine andere Dotierung als das erste Material bzw. als das restliche Drehelement aufweist. Entsprechend könnte zur Herstellung der Brechungsstruktur auch das die Brechungsstruktur umgebende erste Material dotiert werden.

Um alle Schichten zu beleuchten, können mehrere Lichterzeugungsmittel vorgesehen sein, idealerweise eines pro Schicht. Alternativ ist es bei einer besonders kostengünstigen Ausführungsform des erfindungsgemäßen Sensors vorgesehen, dass ein Lichterzeugungsmittel für mehrere, vorzugsweise alle Schichten vorgesehen ist. Hierzu kann beispielsweise als Lichterzeugungsmittel eine Laserdiode oder eine Leuchtdiode gewählt werden, deren Dimensionierung entlang der Drehachse so gewählt ist, dass sie bzw. das durch sie emittierte Licht sämtliche Schichten zumindest abschnittsweise überdeckt bzw. beleuchtet.

Zur einfachen Messung bzw. Detektion des Lichts aller Strahlengänge kann für jede Schicht mindestens ein Lichtdetektionsmittel vorgesehen sein. Sind die Übertragungsfunktionen der einzelnen Brechungsstrukturen bekannt, ergibt sich hieraus eine Gesamtübertragungsfunktion für den gesamten messbaren Winkelbereich. Diese Gesamtübertragungsfunktion kann so gestaltet sein, dass die Kenntnis dieser Gesamtübertragungsfunktion es gestattet, dass für die entsprechende Messung lediglich ein Lichtdetektionsmittel vorgesehen werden kann. D.h. aufgrund des Messergebnisses dieses Lichtdetektionsmittels kann mit Hilfe der Gesamtübertragungsfunktion der Drehwinkel rechnerisch bestimmt werden. Daher ist es bei einer bevorzugten Ausführungsform des erfindungsgemäßen Sensors vorgesehen, dass ein Lichtdetektionsmittel für mehrere, vorzugsweise alle Schichten vorgesehen ist.

Bei einer bevorzugten Ausführungsform des erfindungsgemäßen Sensors ist vorgesehen, dass das Drehelement einen ersten Teil und einen zweiten Teil umfasst, wobei der erste Teil einen ersten Abschnitt der mindestens einen Brechungsstruktur aufweist und der zweite Teil einen zweiten Abschnitt der mindestens einen Brechungsstruktur, und dass der erste Teil und der zweite Teil zusammengefügt sind, wobei der erste Abschnitt und der zweite Abschnitt verbunden sind und die mindestens eine Brechungsstruktur ausbilden. Der erste Teil und der zweite Teil können bei einem mehrschichtigen Aufbau des Drehelements auch eine Schicht des Drehelements bilden bzw. können eine oder mehrere Schichten des Drehelements aus jeweils einem ersten und einem zweiten Teil aufgebaut sein. Diese Art des Aufbaus mit erstem und zweitem Teil ist insbesondere dann herstellungstechnisch interessant, wenn die Brechungsstruktur als Ausnehmung im ersten Material ausgeführt ist. Durch Zusammenfügen des ersten Teils und des zweiten Teils kann auf diese Weise ein nach außen geschlossener Hohlraum bzw. eine geschlossene Brechungsstruktur ausgebildet werden. Besonders bevorzugt werden die jeweiligen Abschnitte der Brechungsstruktur in den ersten Teil und den zweiten Teil geätzt. Vorzugsweise sind die Abschnitte der Brechungsstruktur symmetrisch ausgebildet.

Um Signale von unterschiedlichen Lichterzeugungsmitteln leicht voneinander unterscheiden zu können, ist es bei einer bevorzugten Ausführungsform des erfindungsgemäßen Sensors vorgesehen, dass mehrere Lichterzeugungsmittel vorgesehen sind, wobei die Wellenlänge des Lichts, das von einem der Lichterzeugungsmittel emittierbar ist, sich von der Wellenlänge des Lichts, das von einem anderen der Lichterzeugungsmittel emittierbar ist, unterscheidet. Beispielsweise ist ein Lichterzeugungsmittel zur Emission von blauem Licht ausgelegt, wohingegen ein anderes Lichterzeugungsmittel zur Emission von Infrarotlicht ausgelegt ist. Die unterschiedlichen Wellenlängen ermöglichen eine einfache Zuordnung zu den jeweiligen Lichterzeugungsmitteln bzw. zu den jeweiligen Strahlengängen. Dies kann dazu benutzt werden, gezielt redundante Messungen einfach durchzuführen oder mehrere Drehwinkelbereiche zu einem großen Winkelbereich einfach zusammensetzen zu können.

Entsprechend ist es bei einer bevorzugten Ausführungsform des erfindungsgemäßen Sensors vorgesehen, dass das mindestens eine Lichtdetektionsmittel für eine wellenlängendispersive Lichtdetektion ausgelegt ist, vorzugsweise indem für jedes Lichterzeugungsmittel einer bestimmten Wellenlänge ein eigenes Lichtdetektionsmittel vorgesehen ist, welches für die bestimmte Wellenlänge sensitiv ist. Theoretisch wäre aber natürlich auch ein einzelner energie- bzw. wellenlängendispersiver Detektor denkbar, der z.B. mehrere Photodioden integriert hat, die jeweils in einem anderen Wellenlängenbereich arbeiten, oder der als wellenlängendispersiver CCD-Sensor ausgebildet ist.

Als Lichterzeugungsmittel bieten sich unterschiedlichste, an sich bekannte Lichtquellen an, insbesondere Leuchtdioden oder Laserdioden, die eine Miniaturisierung des Sensors erlauben. Die Lichtquellen können Licht vorzugsweise mit einer gewünschten Wellenlänge oder in einem gewünschten Wellenlängenbereich aussenden. Insbesondere ist es nicht notwendig, dass das erzeugte Licht im optisch sichtbaren Wellenlängenbereich liegen muss. Es kann sich beispielsweise auch um kurzwelligeres Licht oder langwelligeres Licht, insbesondere um Licht im Infrarotbereich, handeln. Entsprechend ist es bei einer bevorzugten Ausführungsform des erfindungsgemäßen Sensors vorgesehen, dass es sich bei dem mindestens einen Lichterzeugungsmittel um mindestens eine Laserdiode handelt.

Die Wahl des Lichtdetektionsmittels richtet sich insbesondere danach, welche Eigenschaftsänderung des Lichts, die durch die Brechungsstruktur winkelabhängig hervorgerufen wird, detektiert werden soll. Weiters spielt für die Wahl des Lichtdetektionsmittels auch die Wellenlänge bzw. der Wellenlängenbereich des zu detektierenden Lichts eine Rolle. Insbesondere im Hinblick auf eine einfache und kostengünstige Lösung ist es bei einer bevorzugten Ausführungsform des erfindungsgemäßen Sensors vorgesehen, dass es sich bei dem mindestens einen Lichtdetektionsmittel um mindestens eine Photodiode handelt. Analog ist es bei einer bevorzugten Ausführungsform des erfindungsgemäßen Sensors vorgesehen, dass es sich bei dem mindestens einen Referenzlichtdetektionsmittel um mindestens eine Photodiode handelt. Gemäß den obigen Ausführungen können je nach Anwendungsfall und Lichtwellenlänge als alternative Lichtdetektionsmittel bzw. Referenzlichtdetektionsmittel z.B. auch CCD-Sensoren, Szintillationszähler, Photomultiplier etc. Verwendung finden.

Die Übertragungsfunktion ist wesentlich durch die Geometrie der Brechungsstruktur bestimmt. Dabei hat eine "einfache" Geometrie nicht unbedingt einen "einfachen" funktionalen Zusammenhang zwischen der interessierenden Eigenschaft des detektierten Lichts und dem Drehwinkel zur Folge. Eine besonders einfach herzustellende Geometrie ist die einer Geraden. Entsprechend ist es bei einer bevorzugten Ausführungsform des erfindungsgemäßen Sensors vorgesehen, dass die mindestens eine Brechungsstruktur in einer auf die Drehachse normal stehenden Ebene entlang einer Linie verläuft, wobei die Linie vorzugsweise Krümmung null aufweist. D.h. der Verlauf der Brechungsstruktur ist entlang der Linie zusammenhängend.

Der sich für eine geradlinig verlaufende Brechungsstruktur ergebende Transmissionsgrad ist jedoch keine lineare Funktion des Drehwinkels, sondern nichtlinear. Wenn jedoch eine lineare - oder sonstige gewünschte - Funktion für den Transmissionsgrad bzw. allgemein für die Übertragungsfunktion realisiert werden soll, kann diese Übertragungsfunktion bzw. dieser funktionale Zusammenhang vorgegeben werden und die herzustellende Geometrie der Brechungsstruktur rückgerechnet oder mittels Simulation angepasst werden. Entsprechend ist es bei einer besonders bevorzugten Ausführungsform des erfindungsgemäßen Sensors vorgesehen, dass die Linie eine derartige Krümmung aufweist, dass zumindest im ersten Drehwinkelbereich eine bestimmte Übertragungsfunktion, vorzugsweise eine lineare Übertragungsfunktion, zwischen dem mit dem mindestens einen Lichtdetektionsmittel detektierbaren Lichtsignal und dem Drehwinkel gegeben ist.

Aufgrund von Imperfektionen im Herstellungsprozess der Brechungsstruktur kann die resultierende Übertragungsfunktion von der theoretischen bis zu einem gewissen Grad abweichen. Um diesem Umstand Rechnung zu tragen, kann die Übertragungsfunktion nach der Herstellung des Sensors durch Messung ermittelt und in einem dafür vorgesehenen Speicher hinterlegt werden. Somit wird auch in diesem Fall eine zuverlässige statische Messung ermöglicht, da das mit dem Lichtdetektionsmittel detektierte Lichtsignal - bzw. ggf. dessen Verhältnis mit dem vom Referenzlichtdetektionsmittel detektierten Lichtsignal - mit der im Speicher hinterlegten Übertragungsfunktion verglichen werden kann, um den zugehörigen Drehwinkel zu bestimmen. Entsprechend ist erfindungsgemäß eine Vorrichtung vorgesehen, die Vorrichtung umfassend mindestens einen erfindungsgemäßen Sensor, wobei ein Speicher vorgesehen ist, in dem zumindest für den ersten Drehwinkelbereich eine durch die mindestens eine Brechungsstruktur erzeugte Übertragungsfunktion zwischen dem mit dem mindestens einen Lichtdetektionsmittel detektierbaren Lichtsignal und dem Drehwinkel hinterlegt ist.

Aufgrund des rein optischen Funktionsprinzips ist der erfindungsgemäße Sensor bzw. die erfindungsgemäße Vorrichtung grundsätzlich völlig immun gegen äußere magnetische Einflüsse. Dies ermöglicht Anwendungen in der Raumfahrt, insbesondere zur Steuerung bzw. Kontrolle von Satellitentriebwerksstelleinrichtungen. Daher ist erfindungsgemäß eine Satellitentriebwerksstelleinrichtung vorgesehen, umfassend einen erfindungsgemäßen Sensor oder eine erfindungsgemäße Vorrichtung.

Der erfindungsgemäße Sensor bzw. die erfindungsgemäße Vorrichtung dient dabei vorzugsweise dazu, den Drehwinkel einer Satellitentriebwerksachse zu bestimmen. Hierzu kann die Satellitentriebwerksachse direkt drehfest mit dem Drehelement verbunden werden oder über ein Getriebe. Entsprechend ist erfindungsgemäß ein Satellit vorgesehen, umfassend ein Satellitentriebwerk und eine erfindungsgemäße Satellitentriebwerksstelleinrichtung, wobei eine Satellitentriebwerksachse des Satellitentriebwerks drehfest oder über ein Getriebe mit dem Drehelement verbunden ist.

### KURZE BESCHREIBUNG DER FIGUREN

Die Erfindung wird nun anhand von Ausführungsbeispielen näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: eine schematische Darstellung eines erfindungsgemäßen Sensors in Aufsicht
- Fig. 2a: eine Schnittansicht durch eine Ausführungsform des erfindungsgemäßen Sensors
- Fig. 2b: eine Seitenansicht des Sensors aus Fig. 2
- Fig. 3a: eine Aufsicht auf ein Drehelement einer weiteren Ausführungsvariante des erfindungsgemäßen Sensors
- Fig. 3b: eine schematische Darstellung einer Schnittansicht des Drehelements aus Fig. 3a
- Fig. 4: eine schematische Darstellung einer weiteren Ausführungsform des erfindungsgemäßen Sensors mit einer gekrümmt verlaufenden Brechungsstruktur in Aufsicht
- Fig. 5a: eine schematische Darstellung einer weiteren Ausführungsform des erfindungsgemäßen Sensors mit insgesamt drei Brechungsstrukturen in Aufsicht
- Fig. 5b: eine schematische Darstellung einer Schnittansicht des Drehelements mit einem mehrschichtigen Aufbau
- Fig. 6a: einen Transmissionsgrad in Abhängigkeit eines Drehwinkels für eine geradlinig verlaufende Brechungsstruktur
- Fig. 6b: den Transmissionsgrad wie in Fig. 6a, jedoch mit einem kleineren Brechungsindex n1 eines ersten Materials des Drehelements

### WEGE ZUR AUSFÜHRUNG DER ERFINDUNG

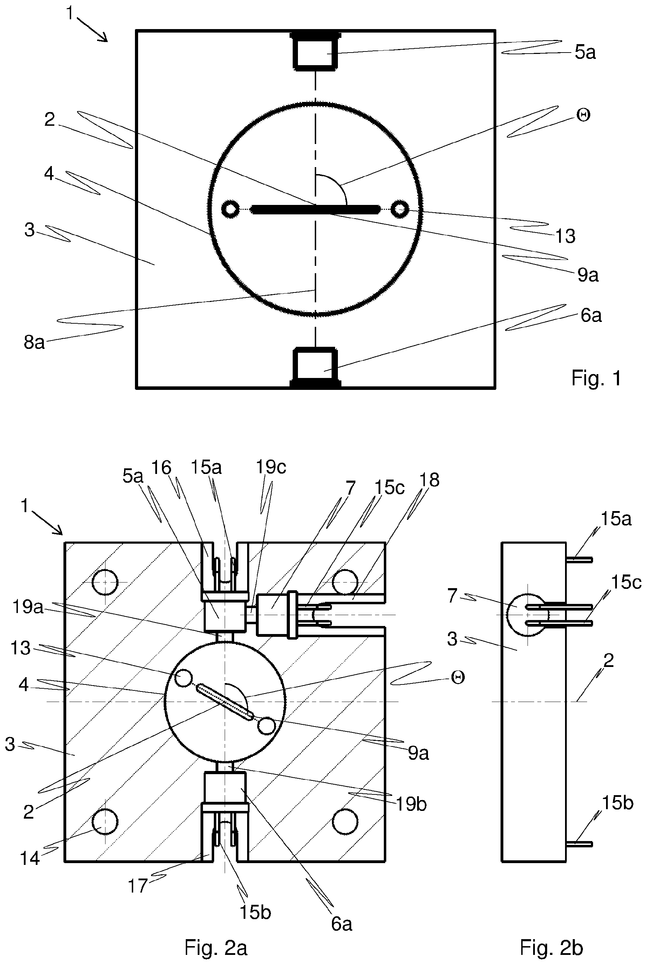

Fig. 1 zeigt schematisch den prinzipiellen Aufbau eines Ausführungsbeispiels eines erfindungsgemäßen Sensors 1 zur Bestimmung eines Drehwinkels Θ um eine Drehachse 2. Hierzu ist ein Drehelement 4 vorgesehen, welches in einem Basiselement 3, das als Gehäuse ausgeführt sein kann, drehbar um die Drehachse 2 gelagert ist. D.h. es wird letztlich der Drehwinkel Θ des Drehelements 4 bestimmt.

Der erfindungsgemäße Sensor 1 arbeitet rein optisch, d.h. zur Bestimmung des Drehwinkels Θ benötigt der Sensor 1 keine Magnetfeldsensoren bzw. ist der Sensor 1 auch gegen äußere magnetische Einflüsse unempfindlich.

Der Sensor 1 weist eine Lichtquelle bzw. ein Lichterzeugungsmittel auf, das in den gezeigten Ausführungsbeispielen vorzugsweise als Laserdiode 5a ausgebildet ist. Die Laserdiode 5a emittiert Licht mit einer bekannten (Ausgangs-)Intensität I₀. Die Laserdiode 5a ist dabei relativ zum Basiselement 3 fix so angeordnet, dass sie Licht in Richtung des Drehelements 4 emittiert. Zur Detektion des von der Laserdiode 5a emittierten Lichts ist ein Lichtdetektionsmittel vorgesehen, das in den gezeigten Ausführungsbeispielen vorzugsweise als Photodiode 6a ausgebildet ist. Dabei ist die Photodiode 6a auf die Wellenlänge bzw. den Wellenlängenbereich des Lichts der Laserdiode 5a sensitiv.

Im gezeigten Ausführungsbeispiel ist die Photodiode 6a genau gegenüber der Laserdiode 5a angeordnet, wobei die Drehachse 2 zwischen der Laserdiode 5a und der Photodiode 6a angeordnet ist. Vorzugsweise ist die Anordnung der Laserdiode 5a und der Photodiode 6a dabei symmetrisch um eine Symmetrieebene, in welcher die Drehachse 2 verläuft.

Entsprechend dieser Anordnung verläuft das von der Laserdiode 5a ausgesendete Licht entlang eines Strahlengangs 8a durch das Drehelement 4, bevor es auf die Photodiode 6a trifft. Das Drehelement 4 ist aus einem ersten Material gefertigt, das einen Brechungsindex n1 aufweist, der je nach Wellenlänge des Lichts und konkretem ersten Material typischerweise in einem Bereich von 1 bis 7, bevorzugt von 1 bis 4, besonders bevorzugt von 3 bis 4 liegen kann. Im Drehelement 4 ist eine Brechungsstruktur 9a angeordnet, die einen Brechungsindex n2 aufweist, wobei n2 ≠ n1, vorzugsweise n2 < n1, gilt. Je nach Wellenlänge des Lichts und konkretem Material der Brechungsstruktur 9a kann n2 typischerweise ebenfalls in den oben für n1 genannten Wertebereichen liegen. Zumindest in einem ersten Drehwinkelbereich verläuft der Strahlengang 8a durch die Brechungsstruktur 9a, wie in Fig. 1 dargestellt.

Die Brechungsstruktur 9a bewirkt eine Reflexions- bzw. Transmissionsänderung des mittels der Photodiode 6a detektierten Lichts in Abhängigkeit vom Drehwinkel Θ. Diese Abhängigkeit kommt durch die geometrische Form der Brechungsstruktur 9a zustande, die im Ausführungsbeispiel der Fig. 1 entlang einer geraden Linie verläuft. Bei unterschiedlichen Drehwinkeln Θ wird das Licht durch die Brechungsstruktur 9a entsprechend unterschiedlich gebrochen und die Transmission ändert sich. Die Brechungsstruktur 9a definiert also eine Übertragungsfunktion für die Lichtintensität bzw. den Transmissionsgrad t, der sich bei bekannter Geometrie der Brechungsstruktur 9a - und bei bestimmten Brechungsindizes n1, n2 sowie einer bestimmten Lichtwellenlänge - mit Hilfe der Fresnelschen Formeln rechnerisch für jeden Drehwinkel Θ ermitteln lässt, vlg. L. Novotny und B. Hecht, "Principles of Nano-Optics", Cambridge University Press, 2nd ed., 2012, ISBN 10: 1107005469.

Das bedeutet, indem die Transmission bzw. die Intensität des Lichts mit der Photodiode 6a bestimmt wird, kann unmittelbar und eindeutig auf den Drehwinkel Θ geschlossen werden. Dies ermöglicht eine statische Winkelmessung, d.h. es ist nicht notwendig, einen Referenzpunkt anzufahren, sondern der Drehwinkel Θ kann unmittelbar bestimmt werden. Auf zusätzliche, den Aufbau verkomplizierende Elemente, wie etwa eine Geberscheibe kann verzichtet werden.

Diese Bestimmung des Drehwinkels Θ funktioniert in einem ersten Drehwinkelbereich. In diesem verläuft der Strahlengang 8a durch die Brechungsstruktur 9a. Dabei tritt im ersten Drehwinkelbereich keine Totalreflexion auf, sodass im ersten Drehwinkelbereich die Photodiode 6a tatsächlich ein verwertbares Lichtsignal detektiert.

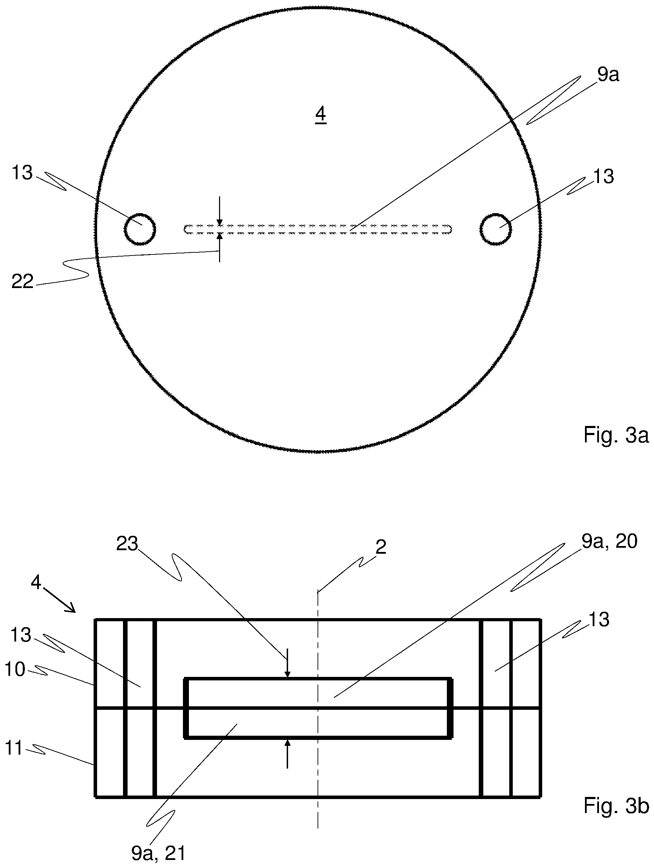

In Fig. 1 sind außerdem Ausnehmungen 13 im Drehelement 4 erkennbar, wobei der Drehwinkel Θ gegenüber einer gedachten Verbindungslinie (gepunktet angedeutet) gemessen ist. Die Ausnehmungen 13 können zur Verbindung mit einem anderen Element, z.B. einer Achse eines Satellitentriebwerks, dienen, um den Drehwinkel dieses Elements mit dem Sensor 1 bestimmen zu können. Alternativ oder zusätzlich können die Ausnehmungen 13 für den Aufbau des Drehelements 4 verwendet werden, wie weiter unten, insbesondere im Zusammenhang mit dem Ausführungsbeispiel der Fig. 3a und Fig. 3b, noch näher ausgeführt werden wird.

Fig. 2a zeigt eine Schnittansicht einer Ausführungsform des erfindungsgemäßen Sensors 1, die sich von jener der Fig. 1 vor allem dadurch unterscheidet, dass eine Referenzphotodiode 7 als Referenzlichtdetektionsmittel vorgesehen ist. Diese dient dazu, Licht, das von der Laserdiode 5a emittiert wird, zu detektieren, noch bevor bzw. ohne dass dieses Licht auf die Brechungsstruktur 9a bzw. das Drehelement 4 trifft. Die Referenzphotodiode 7 liefert also ein Maß für die Intensität I₀. Indem das von der Photodiode 6a detektierte Lichtsignal in Relation zum von der Referenzphotodiode 7 detektierten Lichtsignal gesetzt wird, kann der Transmissionsgrad t bestimmt werden - unabhängig von Schwankungen der Lichtstärke der Laserdiode 5a bzw. von Schwankungen der Intensität I₀, welche Schwankungen z.B. aufgrund von Versorgungsspannungsschwankungen zustande kommen können.

Im Ausführungsbeispiel der Fig. 2a ist das Basiselement 3 als Gehäuse ausgeführt, in welchem die Laserdiode 5a in einem Sitz 16 angeordnet ist, die Photodiode 6a in einem Sitz 17 und die Referenzphotodiode 7 in einem Sitz 18. Das Basiselement 3 ist dabei vorzugsweise aus Aluminium gefertigt, kann aber - insbesondere in Abstimmung auf die jeweilige Anwendung des Sensors 1 - auch aus einer Vielzahl anderer Werkstoffe gefertigt sein, wie z.B. Stahl, Edelstahl oder aus einem Kunststoff. Die Sitze 16, 17, 18 können mittels Bohren und/oder Fräsen hergestellt sein.

Die Sitze 16, 17, 18 sind ferner so ausgebildet, dass elektrische Anschlüsse 15a, 15b, 15c für die Laserdiode 5a, die Photodiode 6a und die Referenzphotodiode 7 nach außen geführt werden können. Wie in der Seitenansicht der Fig. 2b zu erkennen ist, verlaufen freie Enden der elektrischen Anschlüsse 15a, 15b, 15c dabei parallel zur Drehachse 2.

Das Basiselement 3 weist außerdem Ausnehmungen 19a, 19b, 19c auf. Die Ausnehmung 19a ist zwischen der Laserdiode 5a und dem Drehelement 4 angeordnet, um eine zuverlässige Beleuchtung des Drehelements 4 durch die Laserdiode 5a zu ermöglichen. Die Ausnehmung 19a wirkt dabei auch als Blende. Die Ausnehmung 19b ist zwischen dem Drehelement 4 und der Photodiode 6a angeordnet, um den Austritt des Lichts aus dem Drehelement 4 und die Detektion dieses Lichts mittels der Photodiode 6a zu ermöglichen, wobei auch die Ausnehmung 19b als Blende wirkt. Die Ausnehmung 19c schließlich ist zwischen der Laserdiode 5a und der Referenzphotodiode 7 angeordnet, um die direkte Detektion von Licht, das von der Laserdiode 5a ausgesendet worden und nicht durch das Drehelement 4 hindurch getreten ist, zu ermöglichen. Diese Messung liefert ein Maß für I₀, wobei auch die Ausnehmung 19c eine Blendenfunktion erfüllen kann.

Schließlich sind in Fig. 2a Bohrungen 14 erkennbar, die zur Befestigung des Sensors 1 dienen.

Die Brechungsstruktur 9a kann vorzugsweise als Aussparung im ersten Material ausgeführt sein, wobei die Brechungsstruktur 9a insbesondere durch Ätzen hergestellt sein kann. Fig. 3a zeigt ein Drehelement 4 mit einer derart hergestellten Brechungsstruktur 9a, welche eine Breite 22 aufweist. Indem die Brechungsstruktur 9a als Aussparung, insbesondere durch Ätzen hergestellt ist, lassen sich sehr kleine Breiten 22 realisieren, z.B. im Bereich von 0,5 µm bis 500 µm, vorzugsweise im Bereich von 1 bis 100 µm, besonders bevorzugt im Bereich von 5 µm bis 50 µm.

Entsprechend lässt sich der Sensor 1 auch sehr gut miniaturisieren. Der Durchmesser des Drehelements 4 kann typischerweise wenige mm betragen, wobei die untere Grenze in erster Linie dadurch bedingt ist, dass eine mechanisch stabile Verbindung zum jeweiligen Element (z.B. eine Satellitentriebwerksachse), dessen Drehwinkel in einer Anwendung bestimmt werden soll, hergestellt werden kann.

Dabei kann die Brechungsstruktur 9a lediglich als Aussparung in der Oberfläche des Drehelements 4 vorhanden sein. Es kann aber auch in einfacher Weise eine nach außen geschlossene Brechungsstruktur 9a erzeugt werden, indem in die Oberfläche eines ersten Teils 10 ein erster Abschnitt 20 der Brechungsstruktur 9a eingebracht, vorzugsweise geätzt, wird und in die Oberfläche eines zweiten Teils 12 ein zweiter Abschnitt 21 der Brechungsstruktur 9a. Vorzugsweise werden die Abschnitte 20, 21 dabei gleich und/oder symmetrisch ausgebildet.

Die beiden Teile 10, 11 werden sodann mit ihren zueinander weisenden Oberflächen zusammengefügt, sodass die Abschnitte 20, 21 nun die geschlossene Brechungsstruktur 9a ausbilden, wie in Fig. 3b illustriert ist. Die Brechungsstruktur weist dabei eine entlang der Drehachse 2 gemessene Höhe 23 auf, deren Größe typischerweise im Bereich von 0,5 µm bis 500 µm, vorzugsweise im Bereich von 1 bis 100 µm, besonders bevorzugt im Bereich von 5 µm bis 50 µm liegt.

Die beiden Teile 10, 11 können dabei z.B. über eine Profilpassung oder eine geeignete Klebeschicht miteinander verbunden werden. Alternativ oder zusätzlich kann die Verbindung auch mittels Stifte (nicht dargestellt), vorzugsweise aus Keramik, erfolgen, die in die Ausnehmungen 13 eingesetzt werden.

Insbesondere zum Ätzen ist es vorteilhaft, das Drehelement 4 bzw. die Teile 10, 11 aus einem Si-Material, insbesondere aus Si-Wafer, oder einem Glas-Material, insbesondere aus Glas-Wafer, zu fertigen, da in diesem Fall auf erprobte Prozesstechnik zurückgegriffen werden kann.

Es sei jedoch ganz allgemein - ohne Einschränkung auf ein Ausführungsbeispiel - betont, dass die Brechungsstruktur 9a nicht nur als Aussparung ausgebildet werden kann. Beispielsweise ist es denkbar, dass auch die Brechungsstruktur 9a aus einem Si-Material oder einem Glas-Material besteht. Um den Brechungsindex dieser Materialien gezielt zu beeinflussen und somit einen gewünschten Wert für n2 zu erreichen, können das Si-Material und/oder das Glas-Material, die für die Brechungsstruktur 9a vorgesehen sind, auch gezielt dotiert werden. Weiters ist es denkbar, die Brechungsstruktur 9a direkt im Drehelement 4, das aus einem Si-Material oder einem Glas-Material gefertigt ist, durch Dotieren eines gewünschten Bereichs des Drehelements 4 herzustellen.

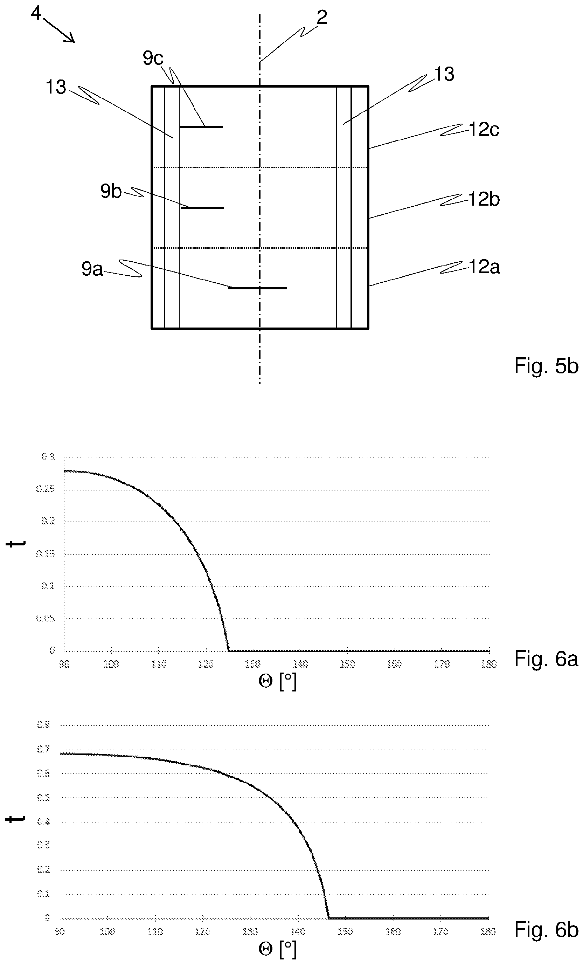

Zur Illustration der Übertragungsfunktion, die mittels der Brechungsstruktur 9a erzeugt wird, ist in Fig. 6a eine Übertragungsfunktion bzw. ein Transmissionsgrad t für die in Fig. 3a dargestellte Brechungsstruktur 9a dargestellt. Diese Brechungsstruktur 9a weist in der Zeichenebene, die normal auf die Drehachse 2 steht, einen im Wesentlichen geradlinigen Verlauf auf. Die Breite 22 der Brechungsstruktur 9a in dieser Ebene beträgt 50 µm. Die Brechungsindizes sind n1=1,75 und n2=1. Die sich ergebende Übertragungsfunktion bzw. der sich ergebende Transmissionsgrad t zeigt jedoch ein stark nichtlineares Verhalten. Sobald Totalreflexion auftritt, ist der Transmissionsgrad t gleich null, was im Ausführungsbeispiel der Fig. 6a für Θ≈125° der Fall ist. Spätestens hier endet der erste Drehwinkelbereich.

Der Winkel, bei dem Totalreflexion auftritt, wird im Wesentlichen durch n1 und n2 festgelegt. Dies ist in Fig. 6b illustriert, die die Übertragungsfunktion bzw. den Transmissionsgrad t für dieselben Parameter wie für Fig. 6a zeigt, außer dass n1=1,2 gilt. Entsprechend tritt Totalreflexion bei Θ≈146,5° auf.

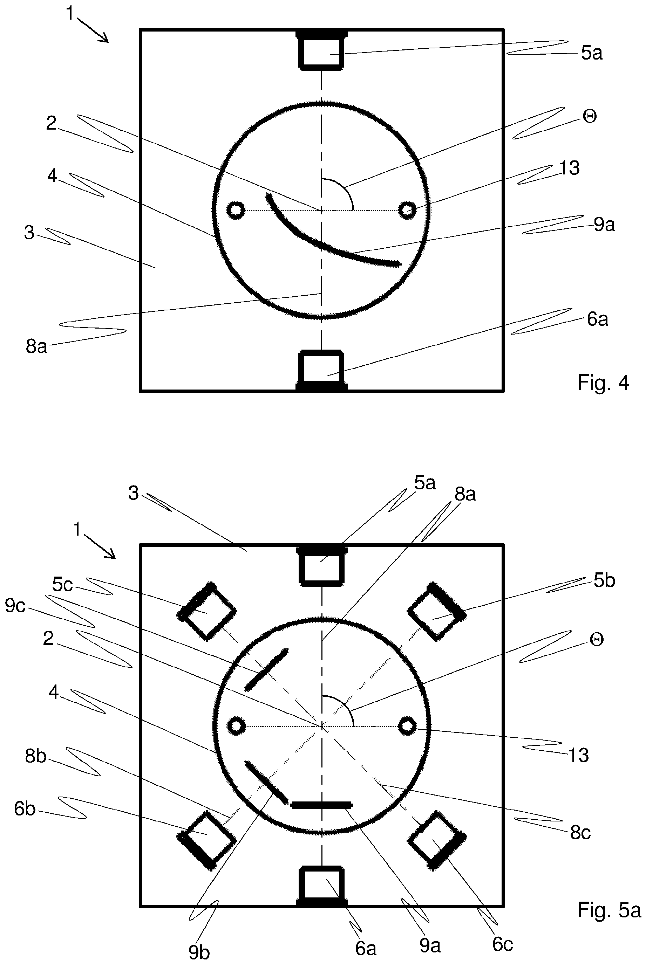

Wenn eine lineare - oder sonstige gewünschte - Funktion für den Transmissionsgrad t bzw. allgemein für die Übertragungsfunktion realisiert werden soll, kann diese Übertragungsfunktion vorgegeben werden und die herzustellende Geometrie der Brechungsstruktur 9a rückgerechnet oder mittels Simulation angepasst werden. Zur Illustration zeigt Fig. 4 eine Ausführungsform, bei welcher die Linie, entlang derer die Brechungsstruktur 9a in der Zeichenebene verläuft, nicht geradlinig, sondern gekrümmt ist, um zumindest im ersten Drehwinkelbereich eine lineare Übertragungsfunktion bzw. einen linear vom Drehwinkel Θ abhängigen Transmissionsgrad t zu generieren.

Fig. 5a zeigt eine Ausführungsform, bei welcher im Drehelement 4 nicht nur die Brechungsstruktur 9a, sondern weitere Brechungsstrukturen 9b, 9c angeordnet sind. Weiters sind zusätzliche Lichterzeugungsmittel vorgesehen, die im gezeigten Ausführungsbeispiel als Laserdioden 5b, 5c ausgebildet sind. Ebenso sind zusätzliche Lichtdetektionsmittel vorgesehen, die im gezeigten Ausführungsbeispiel als Photodioden 6b, 6c ausgeführt sind.

Dabei verläuft ein Strahlengang 8b des von der Laserdiode 5b emittierten und von der Photodiode 6b detektierten Lichts zumindest in einem gewissen Drehwinkelbereich, der im Ausführungsbeispiel der Fig. 5a dem ersten Drehwinkelbereich entspricht, durch die Brechungsstruktur 9b. Analog verläuft ein Strahlengang 8c des von der Laserdiode 5c emittierten und von der Photodiode 6c detektierten Lichts zumindest in einem gewissen Drehwinkelbereich, der im Ausführungsbeispiel der Fig. 5a dem ersten Drehwinkelbereich entspricht, durch die Brechungsstruktur 9c. Auf diese Weise kann in einem einzigen Sensor 1 eine redundante Messung erfolgen.

Vorzugsweise emittieren die Laserdioden 5a, 5b, 5c Licht verschiedener Wellenlänge bzw. Licht in verschiedenen Wellenlängenbereichen, um eine gegenseitige Beeinflussung der Messungen der Photodioden 6a, 6b, 6c zu minimieren bzw. auszuschließen. Dabei sind die Photodioden 6a, 6b, 6c klarerweise auf die Wellenläge bzw. den Wellenlängenbereich des von der jeweils zugehörigen Laserdiode 5a, 5b, 5c emittierten Lichts sensitiv.

Neben der erzielbaren Redundanz lässt sich durch den Einsatz mehrerer Brechungsstrukturen 9a, 9b, 9c aber auch der Bereich der messbaren Drehwinkel Θ erweitern. Im Ausführungsbeispiel der Fig. 5a wäre dies z.B. dadurch möglich, dass mit immer größer werdenden Drehwinkel Θ nacheinander die Brechungsstrukturen 9b und 9a in den Strahlengang 8b gedreht werden. In Kenntnis der durch die Brechungsstrukturen 9b, 9a generierten Übertragungsfunktionen lässt sich der Drehwinkel Θ somit in einem entsprechend großen zusammengesetzten Drehwinkelbereich bestimmen.

Um mehrere Brechungsstrukturen 9a, 9b, 9c im Drehelement 4 auf herstellungstechnisch einfache Art und Weise anordnen zu können, kann das Drehelement 4 mehrschichtig aufgebaut sein. Fig. 5b illustriert einen solchen Fall, wobei sich in der Aufsicht auf dieses Drehelement 4 eine Anordnung der Brechungsstrukturen 9a, 9b, 9c wie in Fig. 5a ergibt. Dabei ist das Drehelement 4 der Fig. 5b aus insgesamt drei Schichten 12a, 12b, 12c aufgebaut, die entlang der Drehachse 2 aufeinander folgend angeordnet sind. Die Schichten 12a, 12b, 12c können z.B. durch eine Profilpassung, durch eine geeignete Klebeschicht oder mittels Stifte (nicht dargestellt), die in den Ausnehmungen 13 angeordnet werden, miteinander verbunden werden.

Vorzugsweise sind auch die Laserdioden 5a, 5b, 5c sowie die Photodioden 6a, 6b, 6c entlang der Drehachse 2 gesehen hintereinander angeordnet, sodass von jeder Laserdiode 5a, 5b, 5c jeweils eine der Schichten 12a, 12b, 12c beleuchtet wird und in jeder Schicht 12a, 12b, 12c ein Strahlengang (nicht dargestellt) verläuft.

### BEZUGSZEICHENLISTE

1 Sensor
2 Drehachse
3 Basiselement
4 Drehelement
5a, 5b, 5c Laserdiode
6a, 6b, 6c Photodiode
7 Referenzphotodiode
8a, 8b, 8c Strahlengang
9a, 9b, 9c Brechungsstruktur
10 Erster Teil
11 Zweiter Teil
12a, 12b, 12c Schicht des Drehelements
13 Ausnehmung im Drehelement
14 Bohrung
15a, 15b, 15c Elektrischer Anschluss
16 Sitz der Laserdiode
17 Sitz der Photodiode
18 Sitz der Referenzphotodiode
19a, 19b, 19c Ausnehmung im Basiselement
20 Erster Abschnitt der Brechungsstruktur
21 Zweiter Abschnitt der Brechungsstruktur
22 Breite der Brechungsstruktur
23 Höhe der Brechungsstruktur
Θ Drehwinkel
t Transmissionsgrad

## Patentansprüche

1. Sensor (1) zur Bestimmung eines Drehwinkels (Θ) um eine Drehachse (2), der Sensor (1) umfassend ein in einem Basiselement (3) um die Drehachse (2) drehbar gelagertes Drehelement (4), welches aus einem ersten Material mit einem ersten Brechungsindex n1 gefertigt ist, wobei zumindest ein relativ zum Basiselement (3) fix angeordnetes Lichterzeugungsmittel (5a, 5b, 5c) vorgesehen ist sowie zumindest ein relativ zum Basiselement (3) fix angeordnetes Lichtdetektionsmittel (6a, 6b, 6c), um zumindest ein vom mindestens einen Lichterzeugungsmittel (5a, 5b, 5c) ausgesandtes und durch das Drehelement (4) entlang zumindest eines Strahlengangs (8a, 8b, 8c) hindurch getretenes Lichtsignal zu detektieren, wobei im Drehelement (4) mindestens eine Brechungsstruktur (9a, 9b, 9c) vorgesehen ist, die einen zweiten Brechungsindex n2 aufweist, wobei n2 ≠ n1, vorzugsweise n2 < n1, gilt und wobei der mindestens eine Strahlengang (8a, 8b, 8c) zumindest in einem ersten Drehwinkelbereich durch die mindestens eine Brechungsstruktur (9a, 9b, 9c) verläuft, um zumindest im ersten Drehwinkelbereich dem mindestens einen mit dem mindestens einen Lichtdetektionsmittel (6a, 6b, 6c) detektierten Lichtsignal einen bestimmten Drehwinkel (Θ) zuordnen zu können, **dadurch gekennzeichnet, dass** das Drehelement (4) entlang der Drehachse (2) gesehen aus mehreren Schichten (12a, 12b, 12c) aufgebaut ist, wobei in jeder Schicht (12a, 12b, 12c) mindestens eine Brechungsstruktur (9a, 9b, 9c) vorgesehen ist, und dass die Brechungsstrukturen (9a, 9b, 9c) verschiedener Schichten (12a, 12b, 12c) zueinander derart angeordnet sind, dass die Strahlengänge (8a, 8b, 8c) in verschiedenen Drehwinkelbereichen durch diese Brechungsstrukturen (9a, 9b, 9c) verlaufen, wobei die verschiedenen Drehwinkelbereiche vorzugsweise abschnittsweise überlappen.

2. Sensor (1) nach Anspruch 1, **dadurch gekennzeichnet, dass** das mindestens eine Lichtdetektionsmittel (6a, 6b, 6c) zur Bestimmung der Lichtintensität ausgelegt ist.

3. Sensor (1) nach einem der Ansprüche 1 bis 2, **dadurch gekennzeichnet, dass** zumindest ein Referenzlichtdetektionsmittel (7) vorgesehen ist, um vom mindestens einen Lichterzeugungsmittel (5a, 5b, 5c) ausgesandtes Licht zu detektieren, noch bevor dieses Licht auf die mindestens eine Brechungsstruktur (9a, 9b, 9c), vorzugsweise auf das Drehelement (4), trifft.

4. Sensor (1) nach Anspruch 3, **dadurch gekennzeichnet, dass** das mindestens eine Referenzlichtdetektionsmittel (7) zur Bestimmung der Lichtintensität ausgelegt ist.

5. Sensor (1) nach einem der Ansprüche 1 bis 4, **dadurch gekennzeichnet, dass** das mindestens eine Lichterzeugungsmittel (5a, 5b, 5c) und das mindestens eine Lichtdetektionsmittel (6a, 6b, 6c) einander gegenüberliegend angeordnet sind, wobei die Drehachse (2) zwischen dem mindestens einen Lichterzeugungsmittel (5a, 5b, 5c) und dem mindestens einen Lichtdetektionsmittel (6a, 6b, 6c) angeordnet ist.

6. Sensor (1) nach einem der Ansprüche 1 bis 5, **dadurch gekennzeichnet, dass** die mindestens eine Brechungsstruktur (9a, 9b, 9c) durch eine Aussparung im ersten Material des Drehelements (4) gebildet ist, wobei die mindestens eine Brechungsstruktur (9a, 9b, 9c) vorzugsweise in das erste Material des Drehelements (4) geätzt ist.

7. Sensor (1) nach einem der Ansprüche 1 bis 6, **dadurch gekennzeichnet, dass** ein Lichterzeugungsmittel (5a) und/oder ein Lichtdetektionsmittel (6a) für mehrere, vorzugsweise alle Schichten (12a, 12b, 12c) vorgesehen ist.

8. Sensor (1) nach einem der Ansprüche 1 bis 7, **dadurch gekennzeichnet, dass** das Drehelement (4) einen ersten Teil (10) und einen zweiten Teil (11) umfasst, wobei der erste Teil (10) einen ersten Abschnitt (20) der mindestens einen Brechungsstruktur (9a, 9b, 9c) aufweist und der zweite Teil (11) einen zweiten Abschnitt (21) der mindestens einen Brechungsstruktur (9a, 9b, 9c), und dass der erste Teil (10) und der zweite Teil (11) zusammengefügt sind, wobei der erste Abschnitt (20) und der zweite Abschnitt (21) verbunden sind und die mindestens eine Brechungsstruktur (9a, 9b, 9c) ausbilden.

9. Sensor (1) nach einem der Ansprüche 1 bis 8, **dadurch gekennzeichnet, dass** mehrere Lichterzeugungsmittel (5a, 5b, 5c) vorgesehen sind, wobei die Wellenlänge des Lichts, das von einem der Lichterzeugungsmittel (5a, 5b, 5c) emittierbar ist, sich von der Wellenlänge des Lichts, das von einem anderen der Lichterzeugungsmittel (5a, 5b, 5c) emittierbar ist, unterscheidet.

10. Sensor (1) nach Anspruch 9, **dadurch gekennzeichnet, dass** das mindestens eine Lichtdetektionsmittel (6a, 6b, 6c) für eine wellenlängendispersive Lichtdetektion ausgelegt ist, vorzugsweise indem für jedes Lichterzeugungsmittel (5a, 5b, 5c) einer bestimmten Wellenlänge ein eigenes Lichtdetektionsmittel (6a, 6b, 6c) vorgesehen ist, welches für die bestimmte Wellenlänge sensitiv ist.

11. Sensor (1) nach einem der Ansprüche 1 bis 10, **dadurch gekennzeichnet, dass** es sich bei dem mindestens einen Lichterzeugungsmittel um mindestens eine Laserdiode (5a, 5b, 5c) handelt.

12. Sensor (1) nach einem der Ansprüche 1 bis 11, **dadurch gekennzeichnet, dass** es sich bei dem mindestens einen Lichtdetektionsmittel um mindestens eine Photodiode (6a, 6b, 6c) handelt.

13. Sensor (1) nach einem der Ansprüche 3 bis 12, **dadurch gekennzeichnet, dass** es sich bei dem mindestens einen Referenzlichtdetektionsmittel um mindestens eine Photodiode (7) handelt.

14. Sensor (1) nach einem der Ansprüche 1 bis 13, **dadurch gekennzeichnet, dass** die mindestens eine Brechungsstruktur (5a, 5b, 5c) in einer auf die Drehachse (2) normal stehenden Ebene entlang einer Linie verläuft, wobei die Linie vorzugsweise Krümmung null aufweist.

15. Sensor (1) nach Anspruch 14, **dadurch gekennzeichnet, dass** die Linie eine derartige Krümmung aufweist, dass zumindest im ersten Drehwinkelbereich eine bestimmte Übertragungsfunktion, vorzugsweise eine lineare Übertragungsfunktion, zwischen dem mit dem mindestens einen Lichtdetektionsmittel (6a, 6b, 6c) detektierbaren Lichtsignal und dem Drehwinkel (Θ) gegeben ist.

## Claims

1. Sensor (1) for determining a rotation angle (θ) about a rotation axis (2), the sensor (1) comprising a rotary element (4) which is mounted in a base element (3) so as to be rotatable about the rotation axis (2) and is produced from a first material having a first refractive index n1, wherein at least one light generating means (5a, 5b, 5c) is provided which is fixedly arranged relative to the base element (3) and at least one light detection means (6a, 6b, 6c) which is fixedly arranged relative to the base element (3) to detect at least one light signal emitted by the at least one light generating means (5a, 5b, 5c) and passed through the rotary element (4) along at least one beam path (8a, 8b, 8c), wherein at least one refractive structure (9a, 9b, 9c) is provided in the rotary element (4), which has a second refractive index n2, wherein n2 ≠ n1, preferably n2 < n1, applies, and wherein the at least one beam path (8a, 8b, 8c) extends at least in a first rotation angle range through the at least one refractive structure (9a, 9b, 9c), in order to be able to assign a specific rotation angle (θ) to the at least one light signal detected by the at least one light detection means (6a, 6b, 6c) at least in the first rotation angle range, **characterized in that,** the rotary element (4), as viewed along the rotation axis (2), is constructed from several layers (12a, 12b, 12c), wherein in each layer (12a, 12b, 12c) at least one refractive structure (9a, 9b, 9c) is provided, and **in that** the refractive structures (9a, 9b, 9c) of different layers (12a, 12b, 12c) are arranged to each other such that the beam paths (8a, 8b, 8c) extend in different rotation angle ranges through these refractive structures (9a, 9b, 9c), wherein the different rotation angle ranges preferably overlap in sections.

2. Sensor (1) according to claim 1, **characterized in that** the at least one light detection means (6a, 6b, 6c) is designed for determining the light intensity.

3. Sensor (1) according to one of the claims 1 to 2, **characterized in that** at least one reference light detection means (7) is provided for detecting light emitted by the at least one light generating means (5a, 5b, 5c) even before this light impinges on the refractive structure (9a, 9b, 9c), preferably on the rotary element (4) .

4. Sensor (1) according to claim 3, **characterized in that** the at least one reference light detection means (7) is designed for determining the light intensity.

5. Sensor (1) according to one of the claims 1 to 4, **characterized in that** the at least one light generating means (5a, 5b, 5c) and the at least one light detection means (6a, 6b, 6c) are arranged opposite to each other, wherein the rotation axis (2) is arranged between the at least one light generating means (5a, 5b, 5c) and the at least one light detection means (6a, 6b, 6c).

6. Sensor (1) according to one of the claims 1 to 5, **characterized in that** the at least one refractive structure (9a, 9b, 9c) is formed by a recess in the first material of the rotary element (4), wherein the at least one refractive structure (9a, 9b, 9c) is preferably etched into the first material of the rotary element (4).

7. Sensor (1) according to one of the claims 1 to 6, **characterized in that** a light generating means (5a) and/or a light detection means (6a) is provided for a plurality of layers (12a, 12b, 12c), preferably for all thereof.

8. Sensor (1) according to one of the claims 1 to 7, **characterized in that** the rotary element (4) comprises a first part (10) and a second part (11), wherein the first part (10) has a first section (20) of the at least one refractive structure (9a, 9b, 9c) and the second part (11) has a second section (21) of the at least one refractive structure (9a, 9b, 9c), and that the first part (10) and the second part (11) are joined, wherein the first section (20) and the second section (21) are connected and form the at least one refractive structure (9a, 9b, 9c).

9. A sensor (1) according to one of the claims 1 to 8, **characterized in that** a plurality of light generating means (5a, 5b, 5c) is provided, wherein the wavelength of the light which can be emitted from one of the light generating means (5a, 5b, 5c) differs from the wavelength of the light which can be emitted by another of the light generating means (5a, 5b, 5c).

10. Sensor (1) according to claim 9, **characterized in that** the at least one light detection means (6a, 6b, 6c) is designed for wavelength-dispersive light detection, preferably by providing for each light generating means (5a, 5b, 5c) of a specific wavelength a separate light detection means (6a , 6b, 6c) which is sensitive to the specific wavelength.

11. Sensor (1) according to one of the claims 1 to 10, **characterized in that** the at least one light generating means is at least one laser diode (5a, 5b, 5c).

12. Sensor (1) according to one of the claims 1 to 11, **characterized in that** the at least one light detection means is at least one photodiode (6a, 6b, 6c).

13. Sensor (1) according to one of the claims 3 to 12, **characterized in that** the at least one reference light detection means is at least one photodiode (7).

14. Sensor (1) according to one of the claims 1 to 13, **characterized in that** the at least one refractive structure (5a, 5b, 5c) extends along a line in a plane normal to the rotation axis (2), wherein the line preferably has zero curvature.

15. Sensor (1) according to claim 14, **characterized in that** the line has such a curvature that at least in the first rotation angle range a certain transfer function, preferably a linear transfer function, is provided between the light signal detectable by the at least one light detection means (6a, 6b, 6c) and the rotation angle (θ).

## Revendications

1. Capteur (1) pour la détermination d'un angle de rotation (Θ) autour d'un axe de rotation (2), lequel capteur (1) comprend un élément rotatif (4) supporté dans un élément de base (3) avec possibilité de rotation autour de l'axe de rotation (2), qui est fait d'un premier matériau ayant un premier indice de réfraction n1, dans lequel sont prévus au moins un moyen de production de lumière (5a, 5b, 5c) disposé de façon fixe par rapport à l'élément de base (3) et au moins un moyen de détection de lumière (6a, 6b, 6c) disposé de façon fixe par rapport à l'élément de base (3) pour détecter au moins un signal lumineux émis par l'au moins un moyen de production de lumière (5a, 5b, 5c) et traversant l'élément rotatif (4) le long d'au moins un trajet de rayonnement (8a, 8b, 8c), au moins une structure de réfraction (9a, 9b, 9c) qui présente un deuxième indice de réfraction n2, où n2 ≠ n1, de préférence n2 < n1, étant prévue dans l'élément rotatif (4), et dans lequel au moins un trajet de rayonnement (8a, 8b, 8c) passe au moins dans une première plage d'angle de rotation à travers l'au moins une structure de réfraction (9a, 9b, 9c) pour permettre l'association de l'au moins un signal lumineux détecté avec l'au moins un moyen de détection de lumière (6a, 6b, 6c) à un angle de rotation (Θ) donné au moins dans la première plage d'angle de rotation, **caractérisé en ce que** l'élément rotatif (4) est composé, vu le long de l'axe de rotation (2), de plusieurs couches (12a, 12b, 12c), au moins une structure de réfraction (9a, 9b, 9c) étant prévue dans chaque couche (12a, 12b, 12c), et **en ce que** les structures de réfraction (9a, 9b, 9c) de différentes couches (12a, 12b, 12c) sont associées les unes aux autres de telle façon que les trajets de rayonnement (8a, 8b, 8c) passent à travers ces structures de réfraction (9a, 9b, 9c) dans différentes plages d'angle de rotation, les différentes plages d'angle de rotation se recoupant de préférence partiellement.

2. Capteur (1) selon la revendication 1, **caractérisé en ce que** l'au moins un moyen de détection de lumière (6a, 6b, 6c) est conçu pour déterminer l'intensité lumineuse.

3. Capteur (1) selon l'une des revendications 1 à 2, **caractérisé en ce qu'**il est prévu au moins un moyen de détection de lumière de référence (7) pour détecter la lumière émise par l'au moins un moyen de production de lumière (5a, 5b, 5c) avant que cette lumière atteigne l'au moins une structure de réfraction (9a, 9b, 9c) et de préférence l'élément rotatif (4).

4. Capteur (1) selon la revendication 3, **caractérisé en ce que** l'au moins un moyen de détection de lumière de référence (7) est conçu pour déterminer l'intensité lumineuse.

5. Capteur (1) selon l'une des revendications 1 à 4, **caractérisé en ce que** l'au moins un moyen de production de lumière (5a, 5b, 5c) et l'au moins un moyen de détection de lumière (6a, 6b, 6c) sont disposés l'un en face de l'autre, l'axe de rotation (2) étant disposé entre l'au moins un moyen de production de lumière (5a, 5b, 5c) et l'au moins un moyen de détection de lumière (6a, 6b, 6c).

6. Capteur (1) selon l'une des revendications 1 à 5, **caractérisé en ce que** l'au moins une structure de réfraction (9a, 9b, 9c) est formée par une découpe dans le premier matériau de l'élément rotatif (4), l'au moins une structure de réfraction (9a, 9b, 9c) étant de préférence gravée dans le premier matériau de l'élément rotatif (4).

7. Capteur (1) selon l'une des revendications 1 à 6, **caractérisé en ce qu'**il est prévu un moyen de production de lumière (5a) et/ou un moyen de détection de lumière (6a) pour plusieurs couches (12a, 12b, 12c), de préférence pour toutes.

8. Capteur (1) selon l'une des revendications 1 à 7, **caractérisé en ce que** l'élément rotatif (4) comprend une première partie (10) et une deuxième partie (11), la première partie (10) présentant une première section (20) de l'au moins un structure de réfraction (9a, 9b, 9c) et la deuxième partie (11) une deuxième section (21) de l'au moins un structure de réfraction (9a, 9b, 9c), et **en ce que** la première partie (10) et la deuxième partie (11) sont assemblées, la première section (20) et la deuxième section (21) étant reliées et formant l'au moins une structure de réfraction (9a, 9b, 90).

9. Capteur (1) selon l'une des revendications 1 à 8, **caractérisé en ce que** plusieurs moyens de production de lumière (5a, 5b, 5c) sont prévus, la longueur d'onde de la lumière que peut émettre l'un des moyens de production de lumière (5a, 5b, 5c) étant différente de celle de la lumière que peut émettre un autre des moyens de production de lumière (5a, 5b, 5c).

10. Capteur (1) selon la revendication 9, **caractérisé en ce que** l'au moins un moyen de détection de lumière (6a, 6b, 6c) est conçu pour une détection de la lumière en dispersion de longueurs d'onde, de préférence avec, pour chaque moyen de production de lumière (5a, 5b, 5c) d'une certaine longueur d'onde, un moyen de détection de lumière (6a, 6b, 6c) spécifique qui est sensible à cette longueur d'onde.

11. Capteur (1) selon l'une des revendications 1 à 10, **caractérisé en ce que** l'au mois un moyen de production de lumière est au moins une diode laser (5a, 5b, 5c).

12. Capteur (1) selon l'une des revendications 1 à 11, **caractérisé en ce que** l'au moins un moyen de détection de lumière est au moins une photodiode (6a, 6b, 6c).

13. Capteur (1) selon l'une des revendications 3 à 12, **caractérisé en ce que** l'au moins un moyen de détection de lumière de référence est au moins une photodiode (7).

14. Capteur (1) selon l'une des revendications 1 à 13, **caractérisé en ce que** l'au moins une structure de réfraction (5a, 5b, 5c) passe dans un plan perpendiculaire à l'axe de rotation (2) le long d'une ligne, laquelle ligne présente de préférence une courbure nulle.

15. Capteur (1) selon la revendication 14, **caractérisé en ce que** la ligne présente une courbure telle qu'au moins dans la première plage d'angle de rotation, il y ait une certaine fonction de transfert, de préférence une fonction de transfert linéaire, entre le signal lumineux détectable avec l'au moins un moyen de détection de lumière (6a, 6b, 6c) et l'angle de rotation (Θ).
